(19)

**Europäisches Patentamt**
**European Patent Office**
**Office européen des brevets**

(11) **EP 4 734 348 A1**

(12) **EUROPEAN PATENT APPLICATION**

(43) Date of publication:
**29.04.2026 Bulletin 2026/18**

(21) Application number: **24209122.1**

(22) Date of filing: **28.10.2024**

(51) International Patent Classification (IPC):
**H02M 3/335** $^{(2006.01)}$   **H02M 1/42** $^{(2007.01)}$

(52) Cooperative Patent Classification (CPC):
**H02M 3/33571; H05B 45/382; H05B 45/39;**
H02M 1/0058; H02M 1/0064; H02M 1/4258;
H05B 45/385

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Tridonic GmbH & Co KG**
**6850 Dornbirn (AT)**

(72) Inventors:
• **Ramezan Ghanbari,, Dr. Alireza**
**6850 Dornbirn (AT)**
• **Afzali Arani, Sayed Reza**
**6850 Dornbirn (AT)**

(74) Representative: **Rupp, Christian**
**Mitscherlich PartmbB**
**Karlstraße 7**
**80333 München (DE)**

(54) **ASYMMETRICAL HALF-BRIDGE FLYBACK CONVERTER WITH INTEGRATED PFC FOR LED DRIVER**

(57) The present invention provides a power converter for LED drivers. The power converter comprises an input stage configured to receive an AC input voltage and convert it to a DC voltage, which is then supplied to input terminals of an asymmetrical half-bridge flyback converter. The asymmetrical half-bridge flyback converter includes a main transformer with a primary winding, a secondary winding, and an auxiliary winding, where the auxiliary winding is configured as a coupled inductor. Additionally, a diode is connected in series with the coupled inductor, with the coupled inductor and diode being arranged between the input stage and one of the input terminals of the asymmetrical half-bridge flyback converter. The output terminals of the converter are configured to supply an output voltage to an LED load.

Fig. 1

EP 4 734 348 A1

**Description**

TECHNICAL FIELD

The present invention relates to AC/DC power converters for LED drivers, specifically focusing on an asymmetrical half-bridge flyback (AHBF) converter with integrated power factor correction (PFC) functionality. This invention addresses the challenges of reducing the number of components in LED drivers while maintaining high power factor and efficiency.

BACKGROUND

LED lighting has become a preferred light source due to its advantages, such as high efficiency, long life, and environmental friendliness. LED drivers act as the interface between the LEDs and the power supply, and their performance impacts the overall LED system efficiency.

In LED lighting systems, achieving high power quality is crucial for meeting regulatory standards, such as IEC 61000-3-2 Class C, and for maximizing efficiency. To achieve this, PFC is often employed in LED drivers to ensure compliance with these standards. Conventionally, boost PFC stages are added to converters to improve power factor, but this typically requires additional components like switches and control circuitry, increasing both the size and cost of the driver.

Additionally, many applications, especially in LED lighting, demand wide dimming capabilities to adjust light intensity. However, existing converter architectures, such as LLC resonant converters, face challenges when dealing with a wide dimming range. LLC converters often require large inductors for resonance, which increases the overall size and complexity of the system, making them less efficient and cost-effective in certain applications.

The demand for simpler and more cost-effective solutions has driven research into integrated PFC designs, where the number of components can be reduced while maintaining the required power factor and efficiency. However, many of these approaches struggle with issues such as high voltage stress, increased losses, or difficulties in accommodating a wide dimming range.

SUMMARY

In view of the above-discussed limitations, the objective of this invention is to introduce an innovative converter architecture that can integrate PFC functionality. One objective is to reduce component count, size, and cost. Another objective is to offer efficient operation over a wide dimming range without compromising on power quality or increasing system complexity.

These and other objectives are achieved by the solution of this disclosure as described in the independent claims. Advantageous implementations are further defined in the dependent claims.

According to a first aspect of the invention, a power converter for LED drivers is provided. The power converter comprises an input stage configured to receive an AC input voltage and convert it to a DC voltage, which is then supplied to input terminals of an asymmetrical half-bridge flyback (AHBF) converter. The AHBF converter includes a main transformer with a primary winding, a secondary winding, and an auxiliary winding, where the auxiliary winding is configured as a coupled inductor. Additionally, a diode is connected in series with the coupled inductor, with the coupled inductor and diode being arranged between the input stage and one of the input terminals of the AHBF converter. The output terminals of the converter are configured to supply an output voltage to an LED load.

The present invention introduces a resonant hybrid flyback converter topology with integrated PFC functionality. It may be understood that the term "resonant hybrid" and the term "asymmetrical half-bridge" are referring to the similar concept and describe the same underlying converter design and functionality in this application. Both terms may be used interchangeably throughout this application.

A Hybrid-flyback Controller XDPS220 is commercially available from INFINEON and its data sheet show the application of such controller for a hybrid flyback.

EP4387395 A1 discloses a hybrid flyback converter and its control scheme.

This configuration ensures that the power converter can efficiently convert AC input voltage to a regulated DC output voltage suitable for driving an LED load, while minimizing components and improving efficiency. The integration of an additional winding into the main transformer of the flyback converter, which functions as a coupled inductor, plays an important part. The combination of the coupled inductor and a series diode replaces the switch commonly found in traditional boost PFC architectures. This configuration enables PFC and enhances overall performance in terms of power quality and reduced distortion.

According to an implementation of the first aspect of the invention, the power converter further comprises an input capacitor arranged between the input stage and the AHBF converter. One terminal of the input capacitor is connected to the coupled inductor, and the other terminal is connected to the second input terminal of the AHBF converter.

The PFC functionality in this design is essentially accomplished by the controlled charging and discharging of the input capacitor. This creates an operational behavior where the input stage of the LED driver exhibits characteristics similar to those of an Ohmic resistor, thereby improving the input current waveform and minimizing distortion. This approach eliminates the need for direct sensing of the input current, making the system simpler and more cost-effective compared to traditional PFC solutions.

According to another implementation of the first aspect, the AHBF converter comprises a pair of switches arranged in a half-bridge configuration to control current through the primary winding of the main transformer.

This switch configuration enables controlled power transfer, ensuring that the primary winding receives the necessary current during each switching cycle, which improves overall energy conversion and efficiency.

According to a further implementation of the first aspect, when the first switch is on, the voltage across the primary winding of the transformer is positive, and the input capacitor discharges through the diode while the coupled inductor carries the current. When the second switch is on, the voltage across the coupled inductor becomes negative, causing the input capacitor to charge.

This switching pattern provides efficient energy transfer and enables the input capacitor to operate in discontinuous capacitor voltage mode (DCVM), which improves the overall power factor and reduces the stress on the components.

According to an additional implementation of the first aspect, the AHBF converter comprises a resonant network, including a resonant capacitor and a resonant inductor, connected between the midpoint of the pair of switches and the primary winding of the main transformer.

The addition of a resonant network enhances soft switching performance, allowing the converter to operate more efficiently at high frequencies by reducing switching losses and electromagnetic interference (EMI).

According to a further implementation of the first aspect, the power converter further comprises a bulk capacitor connected between the two input terminals of the AHBF converter. One terminal of the bulk capacitor is connected to the diode that is connected to the coupled inductor.

This bulk capacitor ensures the stability of the DC voltage supplied to the converter and reduces ripple, which contributes to more stable output and better performance under varying load conditions.

According to a further implementation of the first aspect, the input stage comprises a rectifier configured to rectify the received AC input voltage, with the rectifier comprising four diodes arranged in a bridge configuration.

This aspect ensures proper AC to DC conversion and provides the initial DC voltage required by the converter to operate effectively.

According to a further implementation of the first aspect, the input stage further comprises an input buffer inductor arranged in the supply path of the AC voltage to the rectifier.

The inclusion of the input buffer inductor helps smooth the input current, reducing electromagnetic interference and enhancing the overall power quality.

According to a further implementation of the first aspect, the AHBF converter comprises an output diode connected between the secondary winding of the main transformer and the first output terminal of the AHBF converter, as well as an output capacitor connected between the two output terminals.

This configuration ensures efficient rectification and filtering of the secondary side voltage, providing a stable DC output voltage for the LED load. Preferably, with such configuration, the output voltage can be supplied to the LED load directly without requiring any further converter stage. This direct supply method contributes to the system's overall efficiency and simplicity, ensuring a stable and regulated DC output suitable for driving LED loads.

According to a further implementation of the first aspect, the power converter comprises an overvoltage protection circuit configured to sense the output voltage and regulate the converter's operation to prevent overvoltage conditions at the output terminals.

This feature ensures the protection of the LED load by preventing excessive voltage that could damage the LEDs, thus improving the reliability and safety of the system.

According to a second aspect of the invention, a system is provided. The system comprises a power converter as described in the first aspect or any of the implementations of the first aspect, and an LED-based load supplied directly, or by means of a further converter stage, by the said power converter.

This system configuration allows for efficient and reliable LED driving, ensuring high performance across various load conditions while minimizing power losses and maintaining high power quality. Preferably, the output voltage of said power converter can be supplied to the LED load directly without any further converter stage. By integrating the AHBF converter with PFC and employing DCVM, the system ensures that the input current waveform closely follows the input voltage, reducing distortion and improving overall energy efficiency. Additionally, the power converter's ZVS (zero voltage switching) operation minimizes switching losses, ensuring high efficiency across a wide range of power levels, making the system suitable for various LED lighting applications.

According to a third aspect of the invention, a method for operating a power converter is provided. The method comprises receiving an AC input voltage at input terminals of the power converter, switching a pair of power switches in an asymmetrical half-bridge configuration to control current through the primary winding of the main transformer, controlling the flow of current through the auxiliary winding of the transformer and the diode connected in series with the auxiliary winding to enable power factor correction, charging and discharging the input capacitor connected to the auxiliary winding in DCVM during each switching cycle, and outputting a regulated DC voltage to an LED load via output terminals connected to the secondary winding of the main transformer.

This method ensures precise control of current flow and energy conversion to efficiently power the LED load. By switching the power switches in an asymmetrical half-bridge configuration, the method ensures efficient energy transfer to the load, while the control of the auxiliary winding and diode enables effective power factor correction, enhancing the overall performance of the system. The use of DCVM in the method ensures low harmonic distortion and improved power factor, while the regulation of the output voltage ensures stable LED operation, contributing to both efficiency and reliability.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

BRIEF DESCRIPTION OF DRAWINGS

The above-described aspects and implementation forms are now further explained with respect to the drawings by way of example only, and not for limitation. In the drawings:

Figure 1 shows an exemplary power converter topology according to an embodiment of this invention.

Figure 2 shows exemplary waveforms of key components during different operating modes according to an embodiment of this invention.

Figure 3 shows operating modes of the power converter according to an embodiment of this invention.

Figure 4 (a) shows input current waveforms in relation to the input voltage according to an embodiment of this invention; (b)shows switching waveforms according to an embodiment of this invention.

Figure 5 shows a method according to an embodiment of this invention.

DETAILED DESCRIPTION OF EMBODIMENTS

Illustrative embodiments of a power converter, a system, and a method for operating the power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

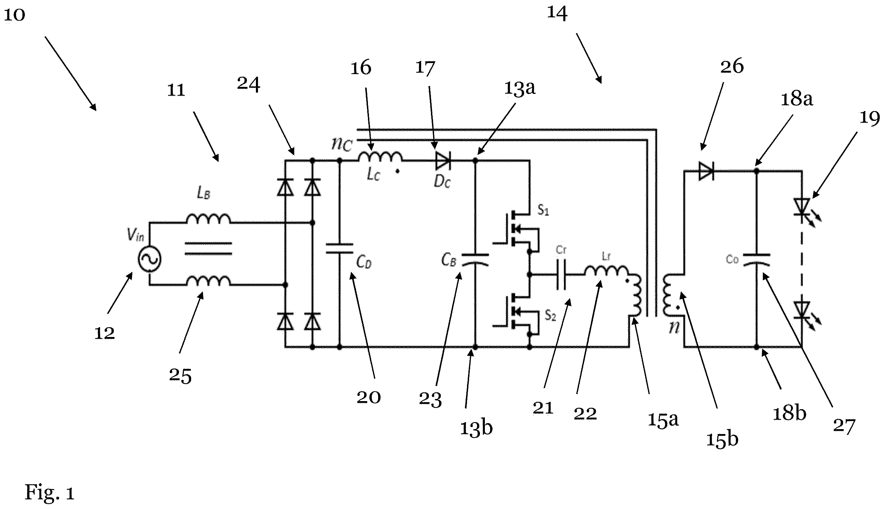

Referring to Figure 1, the power converter 10 according to an embodiment is shown in a schematic view. The converter 10 comprises an input stage 11 that receives an AC input voltage 12. This input voltage 12 is rectified and converted to a DC voltage, which is supplied to input terminals 13a and 13b of an AHBF converter 14. The AHBF converter 14 includes a main transformer with a primary winding 15a, a secondary winding 15b, and an auxiliary winding 16, which is configured as a coupled inductor.

A diode 17 is connected in series with the coupled inductor 16, and this arrangement is positioned between the input stage 11 and the first input terminal 13a of the AHBF converter 14. The output terminals 18a and 18b of the converter supply a regulated DC voltage to an LED load 19, which can either be connected directly or through an additional converter stage, depending on the specific configuration of the system.

The input stage 11 includes a rectifier 24 configured to rectify the AC input voltage 12 into a DC voltage. In an implementation, the rectifier 24 consists of four diodes arranged in a bridge configuration. Additionally, an input buffer inductor 25 may be provided in the supply paths of the AC voltage to the rectifier 24 to filter and smooth the input current, improving overall power factor and reducing harmonic distortion.

In some implementations, the power converter 10 includes a bulk capacitor 23 connected between the two input terminals 13a and 13b of the AHBF converter 14 to stabilize the DC bus voltage. This reduces ripple and ensures smooth operation across varying load conditions, further enhancing the converter's reliability.

The output stage includes an output diode 26 connected between the secondary winding 15b of the transformer and one of the output terminals 18a of the converter. An output capacitor 27 is connected between the output terminals 18a and 18b to smooth the output voltage supplied to the LED load 19, ensuring steady and flicker-free operation of the LEDs.

While the proposed converter primarily focuses on achieving efficient PFC and LED driving, additional safety and control features can also be incorporated. For instance, the converter 10 may be equipped with overvoltage protection by sensing the output voltage of the converter. This ensures that the LED load 19 is protected from potentially damaging overvoltage conditions, enhancing the overall reliability of the system.

Additionally, the converter 10 may include circuitry for sensing the output current. This feedback is provided to the control circuitry of the half-bridge arrangement, which manages the switching of the two main switches (S1 and S2). The sensed current is used to implement a normal control scheme, ensuring proper regulation of the output voltage and current supplied to the LED load 19, as well as maintaining high efficiency and stability across varying load conditions.

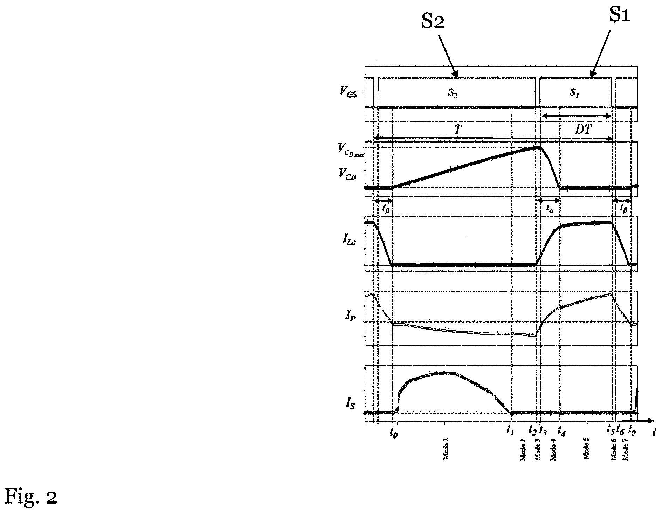

Figure 2 shows key waveforms during one complete switching period of the power converter 10, which correspond to different operating modes described later in this section. These waveforms include the current across the primary winding 15a of the transformer, the resonant current in the tank circuit (comprising resonant inductor 22 and resonant capacitor 21), and the voltage across the input capacitor 20. These waveforms highlight how the converter achieves ZVS, energy transfer to the load, and power factor correction.

The period covered by the waveforms corresponds to one complete switching cycle, during which the first switch (S1) and second switch (S2) alternate turning on and off, leading to distinct voltage and current behaviors across the transformer and other components. The waveforms show how the input capacitor 20 charges and discharges within each cycle, and how resonant currents evolve over time, contributing to efficient power transfer and low loss operation.

When the first switch S1 is turned on, a positive voltage is applied across the primary winding 15a of the transformer. During this period, the input capacitor 20 begins to discharge through the diode 17 while the coupled inductor 16 carries current. The corresponding waveform in Figure 2 shows the positive primary voltage and the rising current through the transformer. $I_{LC}$ represents the current carried by the coupled inductor 16 ($L_C$), $V_{C_D}$ represents the voltage across the input capacitor 20 ($C_D$), and $I_P$ represents the current carried by the primary winding 15a, as shown in Figure 2.

When the second switch S2 is turned on, and the voltage across the primary winding 15a reverses, becoming negative. This results in the charging of the input capacitor 20.

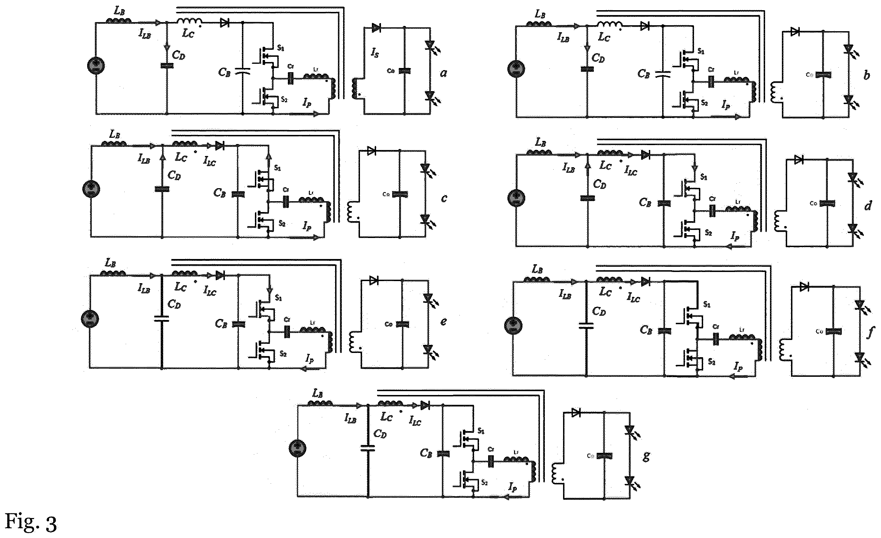

Figure 3 provides a detailed depiction of the seven different operating modes within one switching cycle of the proposed converter, which directly correspond to the waveforms shown in Figure 2. The converter 10 operates in several stages during each cycle to achieve efficient power transfer, ZVS, and power factor correction. Each mode is described as follows:

Mode 1 (t0-t1) : At the beginning of this mode, the second switch S2 is on, and the input capacitor 20 ($C_D$) has discharged. During this time, $C_D$ begins to charge as the buffer inductor $L_B$ carries current. The secondary voltage of the transformer is positive, and energy stored in the transformer and resonant capacitor 21 is delivered to the output via the output diode 26. The shape of the secondary current $I_S$ is a resonant sine wave, and its period is determined by the resonant inductor 22 (Lr) and capacitor 21 (Cr).

Mode 2 (t1-t2) : The second switch S2 remains on, and the input capacitor 20 ($C_D$) continues to charge to its maximum value:

$$V_{C_{D,\max}} = \frac{I_{LB}}{C_D}\left((1-D)T - t_\beta\right) \qquad (1)$$

where $I_{LB}$ is the current through $L_B$, $D$ is the duty cycle of S1, $T$ is the switching period, and $t_\beta$ is the discharge time of primary current $I_P$. At t1, the resonant tank current reaches zero and $I_S$ remains at zero while the primary current consists only of the magnetizing current.

At the end of this mode, the resonant current reaches zero, and the current flow in the transformer is mainly determined by the magnetizing current. The corresponding voltage across the primary winding 15a decreases to zero, as shown in Figure 2.

Mode 3 (t2-t3) : When the second switch S2 turns off, the negative magnetizing current in the transformer forces the body diode of the first switch S1 to turn on, initiating ZVS operation. At this point, the voltage across the coupled inductor 16 becomes $n_C(V_{CB} - V_{Cr})$, and the current flows through $D_C$. As a result, $C_D$ begins to discharge with the current $I_{LB} - I_{LC}$.

Mode 4 (t3-t4) : The first switch S1 turns on under ZVS conditions, maintaining efficient operation. By the end of this mode, the input capacitor $C_D$ is fully discharged. The voltage across the primary winding 15a of the transformer becomes positive again, as shown in Figure 2, and energy begins to be transferred through the transformer's primary winding. The average voltage across $L_B$ over a switching cycle is zero in steady-state condition. Thus, the average voltage across $C_D$ is equal to $V_{in}$:

$$V_{in} = (t_\alpha - t_\beta + (1-D)T)\frac{V_{C_{D,\max}}}{2T} \qquad (2)$$

Also, the average voltage across $L_C$ over a switching cycle is zero:

$$V_{C_S} = \frac{V_{C_{D,\max}} t_\alpha}{2DT} \qquad (3)$$

Mode 5 (t4-t5) : During this mode, the primary current increases as energy is stored in both the transformer and the resonant capacitor 21. No energy is delivered to the LED load during this mode, as the energy is being accumulated in the resonant network. The voltage across $C_D$ remains zero. Based on the voltage across the primary side of the transformer and $L_C$, the following equation is obtained:

$$n_C(V_{C_B} - V_{C_r}) = V_{C_B} \qquad (4)$$

where $n_C$ is the coupled inductor turn ratio.
By rewriting (4):

$$V_{C_B} = \frac{n_C V_{C_r}}{n_C - 1} \qquad (5)$$

Also, $nV_{C_r} = V_O$ :

$$V_{C_B} = \frac{n_C V_O}{n(n_C - 1)} \qquad (6)$$

It can be determined from above equation (6) that $V_{C_B}$ is limited to the reflected output voltage.
Mode 6 (t5-t6) : At t5, the first switch S1 turns off, causing the voltage at the midpoint of the switches to drop until the body diode of the second switch S2 turns on and clamps the voltage. The voltage across the primary side of the transformer becomes $-V_{C_r}$ In this mode, $I_P$ and $I_{LC}$ starts to decrease.
Mode 7 (t6-t0): At t6, the second switch S2 turns on again under ZVS conditions, completing the cycle. Both the primary current $I_P$ and the current through the coupled inductor $I_{LC}$ continue to decrease until they reach zero. This mode ensures the power converter operates efficiently while minimizing switching losses. This mode ends when $I_P$ and $I_{LC}$ reach zero. Duration of this mode can determine as follows:

$$t_\beta = I_M \frac{I_{P,\max}}{V_{CT}} \qquad (7)$$

where $I_M$ is the transformer magnetizing current, $I_{P,max}$ is the maximum primary current and calculated as follows:

$$I_{P,\max} = C_D \frac{V_{C_{D,\,\max}}}{t_\alpha} + \frac{V_{CB} - V_{Cr}}{L_M}(DT - t_\alpha) \qquad (8)$$

By rewriting (2), $V_{CD,\,max}$ is determined:

$$V_{C_{D,\,\max}} = \frac{2TV_{in}}{(t_\alpha - t_\beta + (1-D)T)} \qquad (9)$$

By rewriting (3):

$$t_\alpha = \frac{2DTV_{C_B}}{V_{C_{D,\max}}} \tag{10}$$

Also, from (1), (7), and (8), $t_\beta$ is calculated:

$$t_\beta = \frac{nL_M}{V_O}\left(C_D\frac{V_{C_{D,\max}}}{t_\alpha} + \frac{V_{C_B} - V_O/n}{L_M}(DT - t_\alpha)\right) \tag{11}$$

From (1), the average input current, which is equal to $I_{LB}$, is calculated:

$$I_{in} = C_D\frac{V_{C_{D,\max}}}{(1-D)T - t_\beta} \tag{12}$$

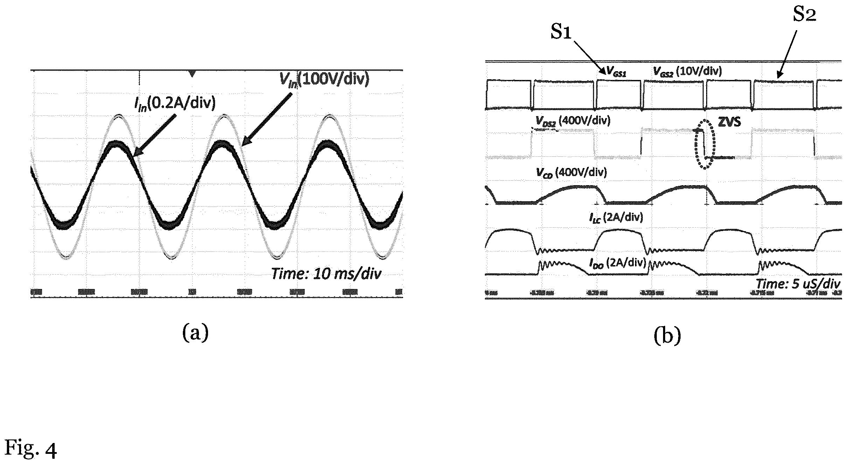

By substituting equations (6), (9), (10), and (11) into (12), the input current is calculated as a function of the input voltage, allowing the power factor correction behavior to be analyzed. For instance, MATLAB may be used to solve equation (12) and plot the input current for half a line cycle, considering the input voltage as a sine wave. A sinusoidal input current waveform can be achieved (e.g., see Figure 4(a)).

The described power converter 10 enables several critical improvements for LED driver applications, including high power factor (PF), low THD, and efficient energy transfer. The integration of the coupled inductor with the AHBF converter 14 allows for the implementation of PFC in DCVM. This results in the input current waveform closely following the input voltage, as the example shown in Figure 4(a), ensuring low distortion and optimal energy efficiency.

By operating in multiple modes during each switching cycle, as shown in Figure 3, the converter achieves ZVS, which reduces switching losses and improves overall efficiency. Figure 4(b) shows an exemplary operating waveforms of a prototype power converter achieves ZVS during operation. This enables the converter to handle varying power levels efficiently, making it suitable for both high and low power LED lighting applications. Additionally, the ability to maintain a sinusoidal input current contributes to a high PF and reduced THD, as confirmed by experimental results.

To verify the theoretical analysis and validate the performance of the proposed power converter, a 55 W prototype was manufactured. The specifications and main components of the prototype are summarized in Table 1, which shows the specification and main components. The prototype was tested under an input voltage of 230 V to evaluate key performance metrics such as PF, THD, input current waveforms, and bus voltage stability.

Table 1

| Spec /Component | Designators | Value or part |
|---|---|---|
| Input voltage | *Vin* | 230 Vrms |
| Output voltage | *VO* | 48 V |
| Output current | *IO* | 1150 mA |
| Diodes | *D1 - D4* | ES3J |
| Power switches | *S1* and *S2* | STD10N60M2 |
| Coupled inductor | *LC* | 800 μH |
| Buffer inductor | *LB* | 1500 μH |
| Bulk capacitor | *CB* | 22 μF |
| DCVM capacitor | *CD* | 3.3 nF |
| Magnetizing inductor | *Lm* | 400 μH |
| Resonant capacitor | *Cr* | 150 nF |

The findings from the experimental testing are as follows:
The input voltage and current waveforms under a 230 V input are shown in Figure 4 (a). The input current waveform is sinusoidal, indicating good power quality and efficient operation. The measured PF was 0.99, demonstrating that the converter effectively aligns the input current with the input voltage. This high PF ensures minimal reactive power, contributing to better energy efficiency and compliance with power quality standards.

The THD of the input current was measured to be approximately 30, which is a low distortion level for an LED driver. Low THD is crucial for minimizing the impact of harmonics on the power grid and ensuring efficient power delivery. Although not shown in the figures, the measured harmonic content complies with the IEC 61000-3-2 Class-C standard for lighting equipment.

Figure 4(b) illustrates the switching waveforms of the converter, demonstrating that ZVS is achieved during operation. ZVS minimizes switching losses by ensuring that the switches (S1 and S2) are activated when the voltage across them is zero. This enhances the overall efficiency of the converter, particularly at high switching frequencies, as it reduces the power dissipation during switching events.

While not shown in the figures, the voltage waveform of the input capacitor ($C_D$) was observed, confirming proper operation in DCVM. The charging and discharging cycles of $C_D$ during each switching cycle contribute to the PFC functionality.

Although not depicted in the figures, the bus voltage of the converter was monitored across different output power levels. The bus voltage remained stable and below 440 V throughout the range of power variations, indicating reliable voltage regulation and safe operation under varying load conditions.

As demonstrated in the experimental results, the proposed hybrid flyback converter architecture, with its coupled inductor, achieves sufficient PFC functionality, resulting in a low THD value. The integration of the coupled inductor allows for the desired PFC behavior by shaping the input current without the need for additional control circuitry or switches typically used in conventional PFC stages.

Moreover, the absence of input current sensing further simplifies the system, avoiding the need for complex control algorithms or current sensors to regulate the PFC operation. Instead, the charging and discharging of the capacitor CD, facilitated by the coupled inductor, ensures a high power factor, low THD value and compliance with power quality standards such as IEC 61000-3-2 Class-C.

By incorporating the coupled inductor directly into the transformer core and removing the need for a separate PFC switch and its control circuitry, the proposed architecture significantly reduces the component count and overall system complexity. This leads to tangible benefits in terms of size, cost, and reliability while maintaining high power factor and low THD. The simplified design makes it an attractive solution for LED driver applications where compactness, cost-efficiency, and power quality are essential.

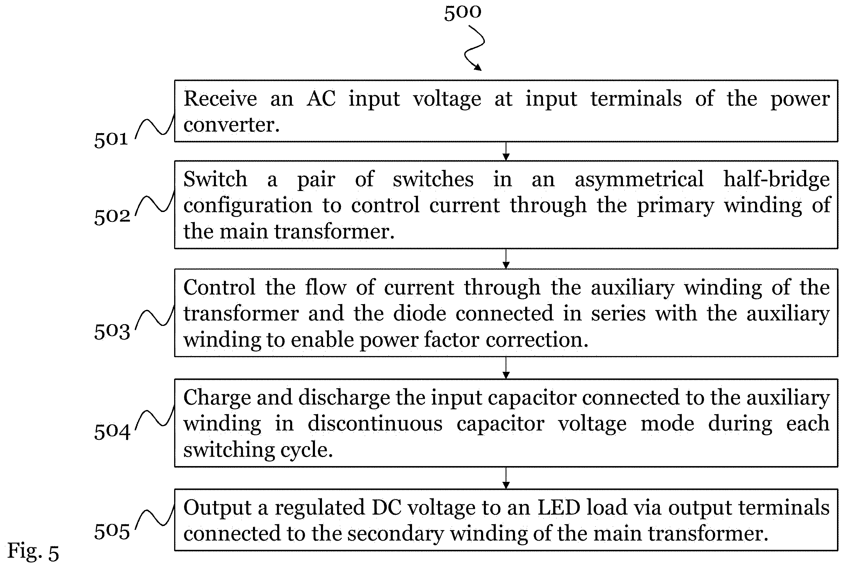

With reference to Fig. 5, an embodiment of a method 500 for operating the proposed power converter 10, is illustrated.

The method begins with receiving an AC input voltage 12 at the input terminals of the power converter 10, as shown in step 501. The AC input is rectified by the rectifier 24 and converted into a DC voltage to supply the AHBF converter 14. The input stage (including the rectifier 24 and input buffer inductor 15) ensures the input current is smoothed and PFC is enabled.

Next, step 502 involves switching a pair of power switches (S1, S2) in an asymmetrical half-bridge configuration. This switching process controls the flow of current through the primary winding 15a of the main transformer 15. In this step, the switches alternate between on and off states during each switching cycle, ensuring energy is transferred from the input to the LED load 19.

In step 503, the method focuses on controlling the flow of current through the auxiliary winding 16 of the transformer and the diode 17 connected in series with the auxiliary winding 16. This step is crucial for enabling PFC, ensuring that the input current follows the sinusoidal waveform of the input voltage. The coupled inductor 16 (auxiliary winding) helps achieve DCVM, improving overall power factor.

Step 504 involves the charging and discharging of the input capacitor 20 in each switching cycle, as described in the theoretical analysis. The input capacitor 20 charges when the second switch S2 is on and discharges when the first switch S1 is on. This step ensures proper energy transfer and ZVS operation, enhancing efficiency and reducing switching losses.

Finally, in step 505, the power converter 14 outputs a regulated DC voltage to the LED load 19 via the secondary winding 15b of the main transformer. The output voltage is smooth and stable, suitable for driving the LED load under various conditions. The converter's design ensures that the output voltage remains regulated and consistent, even with variations in input voltage or load demand.

Figure 5 thus provides a detailed illustration of the method 500 of operating the power converter 10. The method 500 enables efficient energy conversion, improved power factor, and stable voltage regulation, aligning with the claims related to the operational steps of the converter.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A power converter (10) for LED drivers, comprising:

    an input stage (11) configured to receive an AC input voltage (12) and convert the AC voltage (12) to a DC voltage, the DC voltage being supplied to input terminals (13a, 13b) of an asymmetrical half-bridge flyback converter (14) ;
    the asymmetrical half-bridge flyback converter (14) including a main transformer having a primary winding (15a), a secondary winding (15b), and an auxiliary winding (16), the auxiliary winding (16) being configured as a coupled inductor; and
    a diode (17) connected in series with the coupled inductor (16), wherein the coupled inductor (16) and the diode (17) being arranged between the input stage (11) and a first input terminal (13a) of the input terminals of the asymmetrical half-bridge flyback converter (14);
    wherein output terminals (18a, 18b) of the asymmetrical half-bridge flyback converter (14) are configured to supply an output voltage to an LED load (19).

2. The power converter (10) of claim 1, further comprising:
    an input capacitor (20) arranged between the input stage (11) and the asymmetrical half-bridge flyback converter (14), wherein one terminal of the input capacitor is connected to the coupled inductor (16), and the other terminal of the input capacitor is connected to a second input terminal (13b) of the asymmetrical half-bridge flyback converter (14).

3. The power converter (10) of any preceding claims, wherein the asymmetrical half-bridge flyback converter (14) further comprises:
    a pair of switches (S1, S2) arranged in a half-bridge configuration to control current through the primary winding (15a) of the main transformer.

4. The power converter (10) of claims 3, wherein

    when the first switch (S1) is on, the voltage across the primary winding of the transformer is positive, and the input capacitor (20) discharges through the diode (17) while the coupled inductor (16) carries current; and
    when the second switch (S2) is on, the voltage across the coupled inductor (17) becomes negative, causing the input capacitor (20) to charge.

5. The power converter (10) of claim 3 or 4, wherein the asymmetrical half-bridge flyback converter (14) further comprises:
    a resonant network including a resonant capacitor (21) and a resonant inductor (22) connected between the middle point of the pair of switches (S1, S2) and the primary winding (15a) of the main transformer.

6. The power converter (10) of any preceding claims, further comprising:
    a bulk capacitor (23) connected between the two input terminals (13a, 13b) of the asymmetrical half-bridge flyback converter (14), wherein one terminal of the bulk capacitor is connected to the diode (17) that is connected to the coupled inductor (16).

7. The power converter (10) of any preceding claims, wherein the input stage (11) comprises:
    a rectifier (24) configured to rectify the received AC input voltage (12), wherein the rectifier (24) comprises four diodes arranged in a bridge configuration.

8. The power converter (10) of claim 7, wherein the input stage (11) further comprises:
    an input buffer inductor (25) arranged in a supply path of the AC voltage (12) to the rectifier (24).

9. The power converter (10) of any preceding claims, wherein the asymmetrical half-bridge flyback converter (14) further comprises:

an output diode (26) connected between the secondary winding (15b) of the main transformer and a first output terminal (18a) of the asymmetrical half-bridge flyback converter (14), and

an output capacitor (27) connected between two output terminals (18a, 18b) of the asymmetrical half-bridge flyback converter (14).

10. The power converter (10) of any preceding claims, further comprising:
an overvoltage protection circuit configured to sense the output voltage and regulate the converter's operation to prevent overvoltage conditions at the output terminals (18a, 18b).

11. A system comprising:

a power converter (10) according to any of the claims 1 to 10, and

an LED-based load (19) supplied directly or by means of a further converter stage of the system, by said power converter (10).

12. A method (500) for operating a power converter (10) of claims 1 to 10, comprising:

receiving (501) an AC input voltage (12) at input terminals of the power converter (10);

switching (502) a pair of power switches (S1, S2) in an asymmetrical half-bridge configuration to control current through the primary winding (15a) of the main transformer;

controlling (503) the flow of current through the auxiliary winding (16) of the transformer and the diode connected (17) in series with the auxiliary winding (16) to enable power factor correction;

charging and discharging (504) the input capacitor (20) connected to the auxiliary winding (16) in discontinuous capacitor voltage mode during each switching cycle; and

outputting (505) a regulated DC voltage to an LED load (19) via output terminals (18a, 18b) connected to the secondary winding (15b) of the main transformer.

Fig. 1

Fig. 2

Fig. 3

(a)

(b)

Fig. 4

EP 4 734 348 A1

500

501 — Receive an AC input voltage at input terminals of the power converter.

502 — Switch a pair of switches in an asymmetrical half-bridge configuration to control current through the primary winding of the main transformer.

503 — Control the flow of current through the auxiliary winding of the transformer and the diode connected in series with the auxiliary winding to enable power factor correction.

504 — Charge and discharge the input capacitor connected to the auxiliary winding in discontinuous capacitor voltage mode during each switching cycle.

505 — Output a regulated DC voltage to an LED load via output terminals connected to the secondary winding of the main transformer.

Fig. 5

Europäisches Patentamt

European Patent Office

Office européen des brevets

## EUROPEAN SEARCH REPORT

**Application Number**

EP 24 20 9122

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 652 700 A (TSAI FU-SHENG [US] ET AL) 29 July 1997 (1997-07-29) | 1,2,6-12 | INV. H02M3/335 |
| A | * figures 1,2 * | 3-5 | H02M1/42 |
| X | US 6 147 882 A (HUBER LASZLO [US] ET AL) 14 November 2000 (2000-11-14) * figure 2 * * column 2, lines 10-19 * | 1,12 | |
| A | HUANG YING-TING ET AL: "A Modified Asymmetrical Half-Bridge Flyback Converter for Step-Down AC-DC Applications", IEEE TRANSACTIONS ON POWER ELECTRONICS, INSTITUTE OF ELECTRICAL AND ELECTRONICS ENGINEERS, USA, vol. 35, no. 5, 9 September 2019 (2019-09-09), pages 4613-4621, XP011774674, ISSN: 0885-8993, DOI: 10.1109/TPEL.2019.2940322 [retrieved on 2020-02-26] * figures 1,2 * | 1-12 | |
| A | MEDINA-GARCIA ALFREDO ET AL: "Resonant Hybrid Flyback, a New Topology for High Density Power Adaptors", ELECTRONICS, vol. 7, no. 12, 1 December 2018 (2018-12-01), page 363, XP093046586, DOI: 10.3390/electronics7120363 * figures 1,2 * | 1-12 | TECHNICAL FIELDS SEARCHED (IPC) H02M H05B |
| A | US 2023/308024 A1 (CHAN TZU-TSENG [TW]) 28 September 2023 (2023-09-28) * figure 1 * | 1-12 | |

-/--

The present search report has been drawn up for all claims

| Place of search | Date of completion of the search | Examiner |
|---|---|---|
| The Hague | 12 May 2025 | Gotzig, Bernhard |

page 1 of 2

EUROPEAN SEARCH REPORT

Application Number

EP 24 20 9122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/192562 A1 (CHO SHIN [KR] ET AL) 10 July 2014 (2014-07-10) * figures 6,16,18 * ----- | 1-12 | |
| | | | TECHNICAL FIELDS SEARCHED (IPC) |

The present search report has been drawn up for all claims

| Place of search | Date of completion of the search | Examiner |
|---|---|---|
| The Hague | 12 May 2025 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9122

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | | Publication date | Patent family member(s) | | Publication date |
|---|---|---|---|---|---|
| US 5652700 | A | 29-07-1997 | CN | 1151630 A | 11-06-1997 |
| | | | DE | 69635645 T2 | 06-07-2006 |
| | | | EP | 0768748 A2 | 16-04-1997 |
| | | | JP | 3749579 B2 | 01-03-2006 |
| | | | JP | H09266670 A | 07-10-1997 |
| | | | US | 5652700 A | 29-07-1997 |
| | | | US | 5995383 A | 30-11-1999 |
| US 6147882 | A | 14-11-2000 | NONE | | |
| US 2023308024 | A1 | 28-09-2023 | TW | 202339411 A | 01-10-2023 |
| | | | US | 2023308024 A1 | 28-09-2023 |
| US 2014192562 | A1 | 10-07-2014 | CN | 103929074 A | 16-07-2014 |
| | | | KR | 20140091191 A | 21-07-2014 |
| | | | US | 2014192562 A1 | 10-07-2014 |

EPO FORM P0459

For more details about this annex : see Official Journal of the European Patent Office, No. 12/82

**EP 4 734 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4387395 A1